# EUROPEAN PATENT APPLICATION

(11) **EP 4 640 487 A1**
(43) Date of publication of application: **29.10.2025**
(21) Application number: 25165595.7
(22) Date of filing: 24.03.2025
(51) Int. Cl.: B60P 3/07, B60P 3/08

(54) **TRAILER EQUIPPED WITH DOUBLE WHEELS AND VEHICLE COMPRISING SUCH TRAILER**

(30) Priority: 24.04.2024 IT 202400009394
(71) Applicant: Rolfo S.p.A., 12042 Bra (CN) (IT)
(72) Inventor: Rolfo, GIorgio, 12042 Bra (IT); Bergesio, Gianni, 12042 Bra (IT)
(74) Representative: Garavelli, Paolo

(57) **Abstract**

A trailer (4) is described for the transport of goods, in particular motor vehicles, comprising at least three sets of transport wheels, each of the sets being composed of four wheels (7A, 7B, 7C, 7D) placed side by side on the same rotation axle, two first wheels (7A, 7C) placed on one side of the trailer (4) with respect to the direction of travel of the trailer (4), and two second wheels (7B, 7D) placed on the opposite side of the trailer (4), the rotation axle of a first of the wheel sets being placed at a distance varying from 105 cm to 140 cm from the rotation axle of a second of the wheel sets, and the rotation axle of a second of the wheel sets being placed at a distance varying from 105 cm to 140 cm from the rotation axle of a third of the wheel sets.

## Description

The present invention relates to a trailer for the transport of goods (in particular cars) equipped with a plurality of sets of double wheels, and to a vehicle comprising such trailer.

Vehicles equipped with trailers for the transport of goods, in particular motor vehicles, are known in the art, wherein such trailers comprise a plurality of sets of wheels for the transport and support of the trailers themselves.

The Applicant of this Application, for example, produces trailers equipped with two side-by-side trains, each with four wheels (for a total of eight wheels) of transport, and each immediately adjacent to the preceding or following train.

These solutions, however, are not satisfactory in certain application solutions, for example for the transport of heavy goods, especially electric vehicles.

With the currently known solutions, the following problems occur in these operational areas, which are currently unresolved:
1. platforms that require manual positioning and locking operations.
2. The vehicle with two sets of double wheels achieves a maximum axle load capacity of 18 t.

Object of the present invention is solving the above-mentioned prior art problems, by providing a trailer equipped with three sets of double wheels (for a total of 12 wheels), and the related vehicle, which allow the following advantages to be obtained:
1. fully hydraulic platforms for greater operator safety.
2. Increased load capacity of the new vehicle. The axle load capacity reaches 24t, due to the three axle sets, brakes and double wheel tyres, axle spacing between 1050 mm and 1400 mm. The previous vehicle, with two double wheel sets, reached a maximum of 18t on the axles.
3. Two control lever blocks between the axles to reduce overall dimensions and improve operator visibility, divided by function:
   first distributor for front vehicle movements, second distributor for rear vehicle movements.

The above and other objects and advantages of the invention, as will result from the following description, are achieved with a trailer equipped with three sets of double wheels, and the related vehicle, such as those described in the respective independent claims. Preferred embodiments and non-trivial variations of the present invention form the subject matter of the dependent claims.

It is intended that all enclosed claims form an integral part of the present description.

The present invention will be better described by some preferred embodiments, provided by way of example and not of limitation, with reference to the attached drawings, in which:

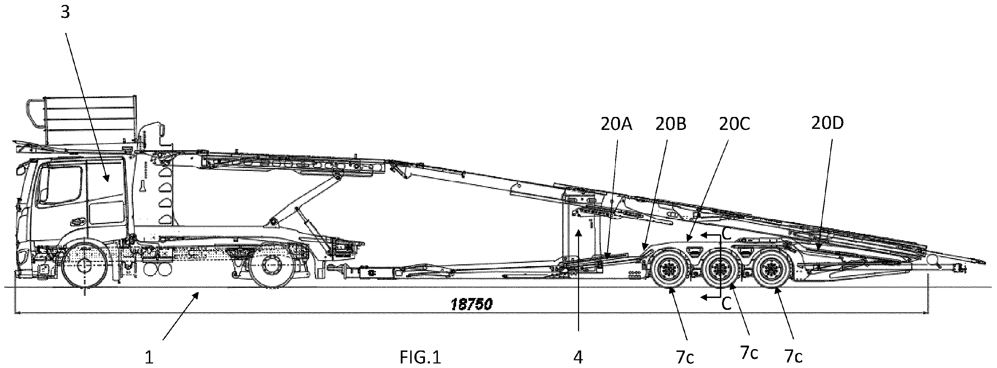

- Figure 1 is a side view of an embodiment of the vehicle and trailer according to the present invention in a loaded position;

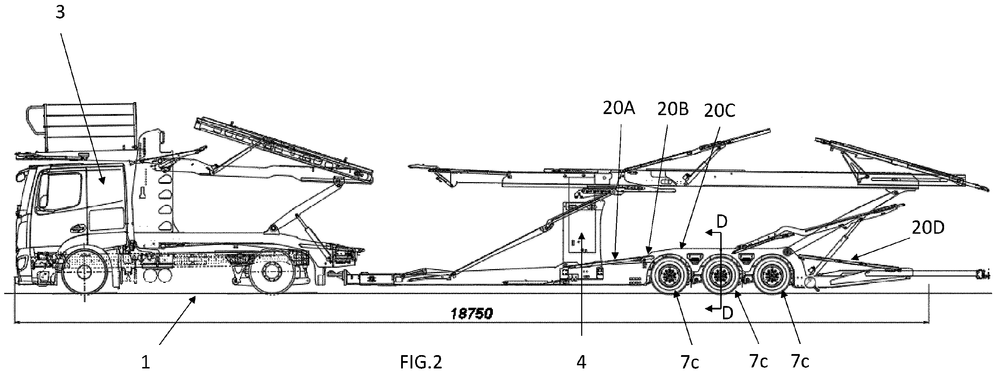

- Figure 2 is a side view of one embodiment of the vehicle and trailer of the present invention in a non-loaded rest position;

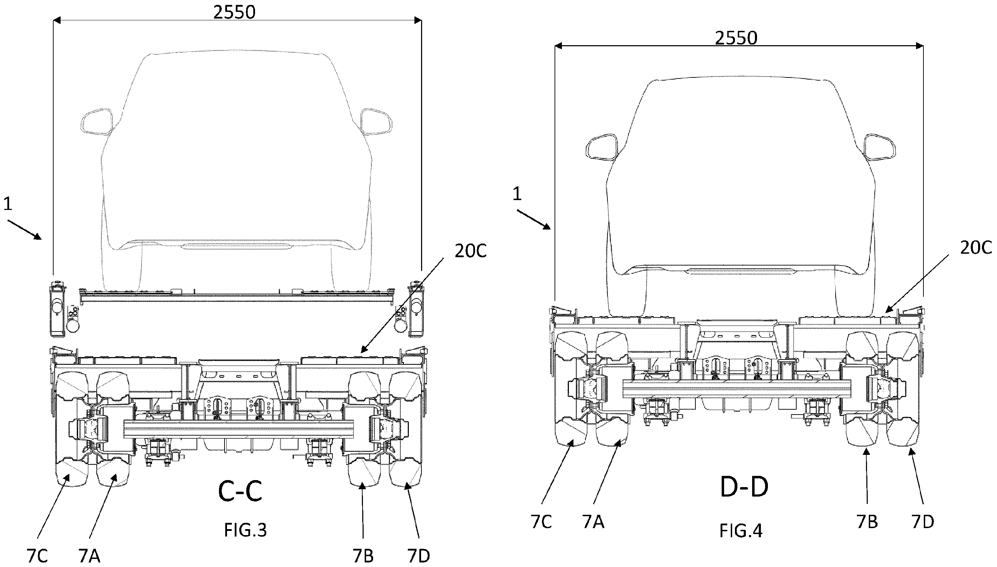

- Figure 3 is a sectional view, taken along the line CC of Figure 1;
- Figure 4 is a sectional view, taken along the line DD of Figure 2;
- Figure 5 shows a view of the positioning of the platform movement controls; and

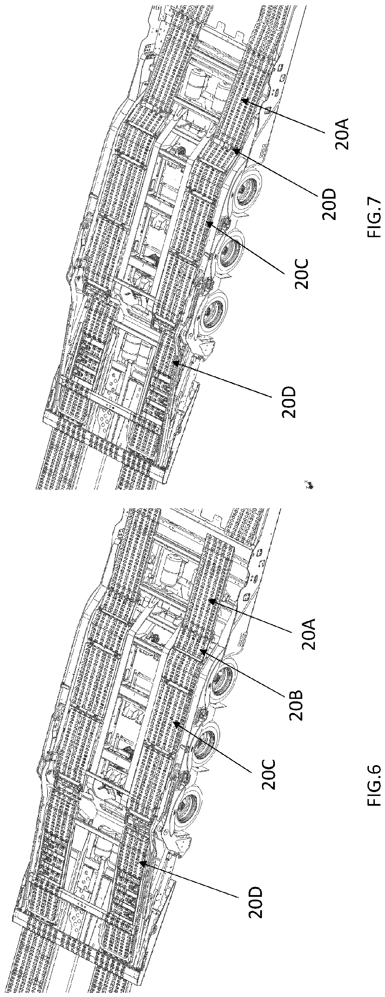

- Figures 6 and 7 show platforms 20A, 20B, 20C and 20D in their positions of use.

With reference to the Figures, a preferred embodiment of the present invention is illustrated and described. It will be immediately obvious that countless variations and modifications can be made to the described invention (for example, relating to shape, dimensions, various colors and parts with equivalent functionality) without departing from the scope of the invention as appears from the attached claims.

The invention first of all concerns a trailer 4 for the transport of goods, in particular cars, comprising at least three sets of transport wheels, each of such sets being composed of four wheels 7A, 7B, 7C, 7D placed side by side on the same rotation axle, two first wheels 7A, 7C placed on one side of the trailer 4 with respect to the direction of travel of the trailer 4 itself, and two second wheels 7B, 7D placed on the opposite side of the trailer 4.

The rotation axle of a first of the wheel sets being placed at a distance varying from 105 cm to 140 cm from the axle of rotation of a second of the wheel trains, and the axle of rotation of a second of the wheel trains being placed at a distance varying from 105 cm to 140 cm from the axle of rotation of a third of the wheel trains.

In particular, the distance between the axles of the wheel sets is 105 cm.

According to the illustrated configuration, the total size of the trailer 4 perpendicular to its direction of travel is equal to 255 cm.

With this configuration, it is possible to create trains whose wheels 7A, 7B, 7C, 7D have a diameter varying from 70 cm to 85 cm, smaller than that of the wheels of the previous vehicles, obtaining a further benefit for the final solution.

In particular, the diameter of the wheels is 78 cm.

Still according to the invention and as illustrated, the trailer 4 comprises a first liftable platform 20A placed in front of the wheel train, a second adjustable platform 20B, connected upstream to the platform 20A and on the opposite side to a third platform 20C placed above the wheel train and a fourth liftable platform 20D placed behind the axle train.

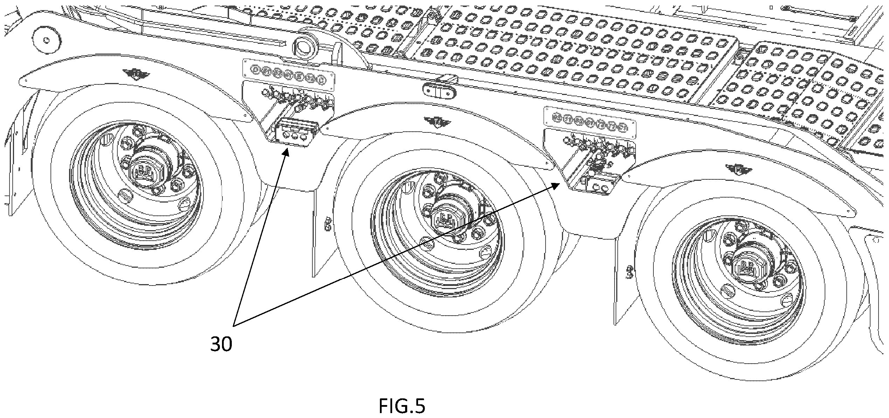

According to the invention, as illustrated in Figure 5, the trailer 4 further comprises controls 30 for operating and moving the first and second platforms 20A, 20B placed between the first and second set of wheels and controls 30 for operating and moving the third and fourth platforms 20C, 20D placed between the second and third set of wheels.

The invention also relates to a vehicle 1 comprising a trailer 4 as described above.

The main advantages of the double wheel configuration of the present invention are:
1. increased load capacity of the new vehicle. 22 t on the axles are achieved, thanks to the double wheel tyres, suitable axles and brakes, distance between the axles between 1050 mm and 1400 mm. The previous vehicle, with two double wheel sets, reached a maximum of 18 t on the axles.

Some preferred embodiments of the present invention have been illustrated and described above: obviously, numerous variations and modifications, functionally equivalent to the previous ones, will be immediately evident to those skilled in the art and which fall within the scope of the invention as highlighted in the attached claims.

## Claims

1. Trailer (4) for the transport of goods, in particular motor vehicles, **characterized in that** it comprises at least three sets of transport wheels, each of said sets being composed of four wheels (7A, 7B, 7C, 7D) placed side by side on the same rotation axle, two first wheels (7A, 7C) placed on one side of said trailer (4) with respect to the direction of travel of said trailer (4), and two second wheels (7B, 7D) placed on the opposite side of said trailer (4), the rotation axle of a first of said sets of wheels being placed at a distance varying from 105 cm to 140 cm from the rotation axle of a second of said sets of wheels, and the rotation axle of a second of said sets of wheels being placed at a distance varying from 105 cm to 140 cm from the rotation axle of a third of said sets of wheels;
**in that** it also comprises a first liftable loading platform (20A), a second adjustable loading platform (20B) placed behind the first loading platform (20A), a third loading platform (20C) placed above said wheel sets and upstream of the first loading platform (20B) with respect to the loading direction of the goods, and a fourth loading platform (20D) placed upstream of the third loading platform (20C); and
**in that** it also comprises controls (30) for operating and moving the first and second platforms (20A, 20B) placed between the first and second set of wheels and controls (30) for operating and moving the third and fourth platforms (20C, 20D) placed between the second and third set of wheels.

2. Trailer (4) according to claim 1, **characterised in that** the distance between the axles of said wheel sets is equal to 105 cm.

3. Trailer (4) according to any of the preceding claims, **characterised in that** the total size of said trailer (4) perpendicular to its direction of travel is equal to 255 cm.

4. Trailer (4) according to any of the preceding claims, **characterised in that** the diameter of each of said wheels (7A, 7B, 7C, 7D) varies from 70 cm to 85 cm.

5. Trailer (4) according to any of the preceding claims, **characterised in that** the diameter of each of said wheels (7A, 7B, 7C, 7D) is equal to 78 cm.

6. Trailer (4) according to any of the preceding claims, **characterised in that** the distance between its axles is between 1050 mm and 1400 mm.

7. Vehicle (1) comprising a trailer (4) according to any of the preceding claims.
